# FASCICULE DE BREVET EUROPEEN

(11) **EP 2 243 408 B1**
(45) Date de publication et mention de la délivrance du brevet: **30.05.2012**
(21) Numéro de dépôt: 09290895.3
(22) Date de dépôt: 01.12.2009
(51) Int. Cl.: A47J 45/10

(54) **Dispositif de préhension amovible d'un récipient culinaire et récipient culinaire pourvu d'un tel dispositif**
Abnehmbarer Griff für ein Kochgefäß und Kochgefäß mit einem solchen Griff
Removable gripping device for a cooking vessel and cooking vessel provided with such a device

(30) Priorité: 16.10.2008 FR 0805741
(43) Date de publication de la demande: 27.10.2010
(73) Titulaire: Tele-Shopping, 92100 Boulogne (FR)
(72) Inventeur: Corbin, Jean-Yves, 92100 Boulogne (FR); D'Estais, Mathias, 92100 Boulogne (FR)
(74) Mandataire: Louiset, Raphael

(56) Documents cités:
- EP-A- 0 769 263
- US-A- 2 495 954

## Description

L'invention a trait au domaine technique des ustensiles de cuisine et concerne plus particulièrement les poignées amovibles pour récipients.

Par « récipient » on désigne ici un objet creux destiné à recevoir des produits, par exemple une casserole, un faitout, une poêle, une sauteuse.

Par « poignée amovible pour récipients» on désigne ici un dispositif pouvant être monté et démonté à volonté et de manière contrôlée à un récipient, ce dispositif permettant de déplacer le récipient vide ou non.

L'invention concerne plus particulièrement les poignées amovibles avec verrouillage, pour récipients, permettant d'assurer de très faibles risques de démontage intempestif ou accidentel de la poignée amovible.

On connaît déjà, dans l'art antérieur, diverses conceptions de poignées amovibles pour récipients.

Dans une conception très fréquente, les poignées amovibles nécessitent, pour leur utilisation, que les récipients soient pourvus de moyens de liaison ou d'assemblage. Le cas échéant, les moyens de liaison ont également une fonction de préhension manuelle du récipient, lorsque la poignée amovible n'est pas utilisée (voir document FR 2 676 169). La présence de ces moyens de liaison, sur le récipient, est source de nombreux inconvénients. L'assemblage de ces moyens de liaison sur le récipient, par exemple par soudage ou rivetage, est une opération coûteuse. Ces moyens de liaison, généralement en saillie de la paroi latérale du récipient, peuvent permettre la rétention de salissures et gênent l'empilement des récipients. Par ailleurs, l'utilisateur est fréquemment contraint d'orienter de manière précise la poignée par rapport au récipient, en fonction de la situation de ces moyens de liaison.

Dans une autre conception, les poignées amovibles peuvent être mises en place sur des récipients de forme déterminée, ces récipients ne comprenant pas de moyens de liaison ou d'assemblage à la poignée amovible. Le document CA 2187721 décrit ainsi une poignée comprenant un mors fixe, de forme complémentaire à la paroi externe du récipient et un mors mobile, de forme complémentaire à la paroi interne du récipient, la mouvement du mors mobile par rapport au mors fixe étant un mouvement de translation, suivant l'axe d'élancement de la poignée. Dans le dispositif décrit par le document CA 2187721, la poignée est pourvue d'un levier inférieur articulé en rotation perpendiculairement à l'axe d'élancement du manche de poignée, le pivotement du levier inférieur, à l'encontre d'un ressort de compression, provoquant la translation du mors mobile, et le serrage de la paroi latérale du récipient entre le mors fixe et le mors mobile, cette paroi latérale étant pourvue d'un bord supérieur ourlé, formant verseur, venant en appui contre la paroi ourlée complémentaire du mors fixe. Une variation dans l'épaisseur de la paroi latérale des récipients se traduit par une compression plus ou moins importante du ressort à l'encontre duquel pivote le levier. On peut se reporter également aux documents CA 2247643, JP -2001-190432, JP-2002-34804, DE-10100123, JP-2001-275858, WO-2007-101923. Ces poignées amovibles connues dans l'art antérieur présentent plusieurs inconvénients. En particulier, ces poignées sont de conceptions complexes et onéreuses et ne peuvent être utilisées, dans de bonnes conditions de sécurité, pour des récipients tels que des casseroles de diamètres très différents. En outre, le dégagement ménagé en position ouverte entre le mors fixe et le mors mobile est assez faible, et le passage du bord ourlé du récipient est souvent difficile.

L'invention vise notamment à remédier aux difficultés mentionnées auparavant.

A cette fin, selon un premier objet, l'invention se rapporte à un dispositif de préhension amovible d'un récipient culinaire, ce dispositif comprenant un organe fixe et un organe mobile entre une position ouverte et une position fermée, ce dispositif comprenant des moyens de déplacement adaptés à être commandés manuellement entre une position d'ouverture et une position de fermeture, ces moyens de déplacement entraînant, lors du passage de leur position d'ouverture à leur position de fermeture, le mouvement de l'organe mobile de sa position ouverte à sa position fermée, l'organe fixe comprenant une paroi avant destinée à venir au moins partiellement en appui contre la face externe de la paroi périphérique d'un récipient culinaire, l'organe mobile étant destiné, dans sa position fermée, à venir en appui contre la face interne de la paroi périphérique dudit récipient, l'organe mobile comprenant deux bras, chacun des deux bras étant pourvu d'une partie extrême s'étendant sensiblement parallèlement à la paroi avant de l'organe fixe, les moyens de déplacement entraînant, lors du passage entre leur position de fermeture et leur position d'ouverture, le déplacement latéral des parties extrêmes des bras.

Dans une mise en oeuvre, les deux bras sont articulés l'un par rapport à l'autre autour d'un axe, le déplacement des parties extrêmes des deux bras comprenant une composante sensiblement perpendiculaire à l'axe d'articulation.

En variante, les deux bras sont fixés rigidement à leur extrémité interne (opposée à leur extrémité de préhension du récipient), l'élasticité des bras étant suffisante pour permettre leur flexion sous l'application d'une contrainte mécanique.

Les deux bras sont par exemple venus de matière avec l'axe d'articulation, les deux bras étant notamment les deux branches d'un ressort de torsion dont les spires forment axe d'articulation.

Dans une mise en oeuvre, les deux bras sont montés articulés sur un axe, le déplacement des parties extrêmes des deux bras s'effectuant sensiblement suivant un arc de cercle dont l'axe contient sensiblement l'axe l'articulation.

Avantageusement, les moyens de déplacement comprennent une came et un levier, la came étant rapportée au levier ou venue de matière avec le levier et transformant le mouvement de rotation du levier en un mouvement d'écartement des bras l'un par rapport à l'autre.

Avantageusement, les bras sont articulés autour d'un axe et le levier est articulé autour d'un axe sensiblement perpendiculaire à l'axe d'articulation des bras, une came transformant le mouvement de rotation du levier en un mouvement d'écartement des bras l'un par rapport à l'autre.

En variante, le système d'écartement des bras se présente sous forme d'un système de bielles, dont une extrémité est reliée au levier et l'autre à chacun des bras, de sorte que l'élévation du levier provoque, par le jeu des bielles, l'écartement des bras.

Le dispositif comprend avantageusement des moyens de blocage, adaptés à immobiliser l'organe mobile dans sa position fermée.

Dans une mise en oeuvre, les moyens de blocage comprennent des moyens portés par la came et des moyens complémentaires portés par une pièce solidaire d'un bouton de commande.

Avantageusement, les moyens portés par la came comprennent une saillie apte à venir en appui réversible contre une saillie d'un coulisseau solidaire du bouton de commande.

Dans une mise en oeuvre, les parties extrêmes des bras s'étendent, en position d'ouverture, de part et d'autre de la paroi avant de l'organe fixe.

Avantageusement, les parties extrêmes des bras sont pourvues d'une courbure, lorsque vue en coupe suivant un plan sensiblement perpendiculaire à leur direction d'élancement.

Dans une mise en oeuvre avantageuse, le dispositif comprend un témoin visuel passant d'un premier état à un deuxième état, lorsque les moyens de déplacement quittent leur position d'ouverture ou leur position de fermeture.

L'invention propose, selon un deuxième objet, un ensemble ou set culinaire comprenant au moins un récipient culinaire accompagné d'au moins un dispositif de préhension tel que décrit ci-dessus. Commercialement, cet ensemble peut comprendre un récipient et un dispositif de préhension séparés, ou un récipient sur lequel est monté le dispositif de préhension.

D'autres objets et avantages de l'invention apparaîtront à la lumière de la description faite ci-après en référence aux dessins annexés dans lesquels :
- la figure 1 est une vue en perspective éclatée d'un dispositif de préhension de récipient, selon un mode de réalisation ;
- la figure 2 est une vue en perspective du dispositif représenté en figure 1, ce dispositif étant représenté en position de fermeture, c'est-à-dire une position de montage sur un récipient, le récipient n'étant pas représenté sur cette figure 2, afin de simplification ;
- la figure 3 est une vue de dessus du dispositif représenté en figure 2 ;
- la figure 4 est une vue latérale du dispositif représenté en figures 2 et 3 ;
- la figure 5 est une vue en coupe longitudinale du dispositif représenté sur les figures 2 à 4 ;
- la figure 6 est une vue en perspective du dispositif représenté en figures 2 à 5, ce dispositif étant vu en position d'ouverture ;
- la figure 7 est une vue de dessus du dispositif représenté en figure 6 ;
- la figure 8 est une vue latérale du dispositif représenté en figures 6 et 7 ;
- la figure 9 est une vue en coupe longitudinale du dispositif représenté en figures 6 à 8 ;
- la figure 10 est une vue en perspective d'un dispositif selon l'invention, dans une variante de réalisation, ce dispositif étant vu avant montage sur un récipient ;
- la figure 11 est une vue en perspective du dispositif représenté en figure 10, vu en position de préparation au montage sur un récipient ;

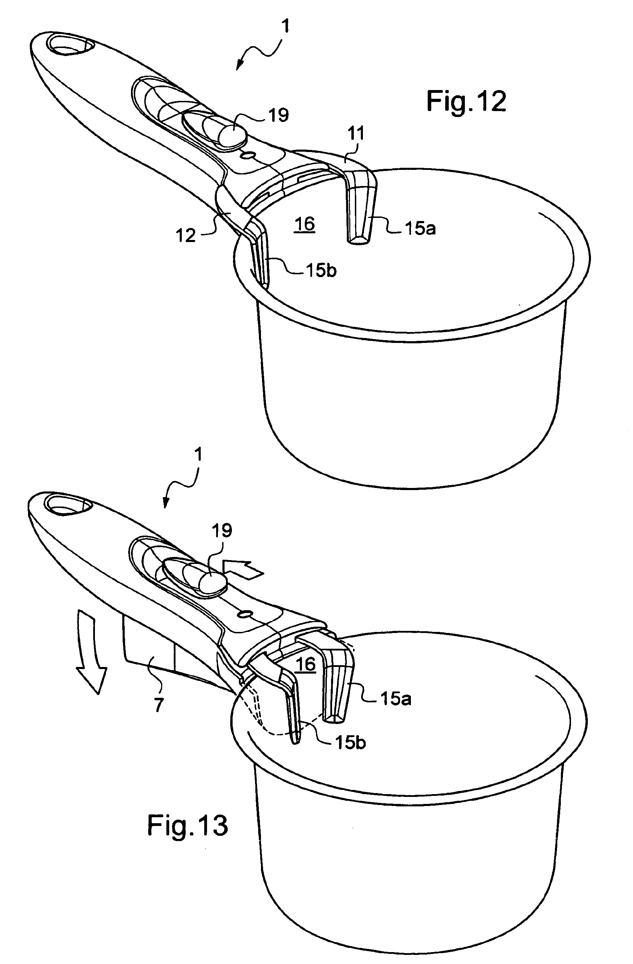

- la figure 12 est une vue en perspective du dispositif représenté en figures 10 et 11, vu en position de montage sur un récipient ;
- la figure 13 est une vue du dispositif représenté en figures 10 à 12, vu en position de démontage d'un récipient ;
- la figure 14 est une vue schématique de dessus illustrant le montage d'un dispositif du type représenté en figures 1 à 13, sur un récipient de grand diamètre ;
- la figure 15 est une vue schématique de dessus illustrant le montage d'un dispositif du type représenté en figures 1 à 13, sur un récipient de diamètre intermédiaire ;
- la figure 16 est une vue schématique de dessus illustrant le montage d'un dispositif du type représenté en figures 1 à 13, sur un récipient de petit diamètre.

Le dispositif de préhension représenté sur les figures (par la suite dénommé poignée amovible ou poignée 1) est pourvu de moyens de verrouillage, permettant d'assurer de très faibles risques de démontage intempestif ou accidentel.

Dans la suite de cette description, les termes « inférieur », « supérieur », « longitudinal », « transversal », « haut », « bas », « avant », « arrière », sont employés en référence à la poignée 1 amovible montée sur un récipient, ce récipient étant posé sur un plan de travail quelconque.

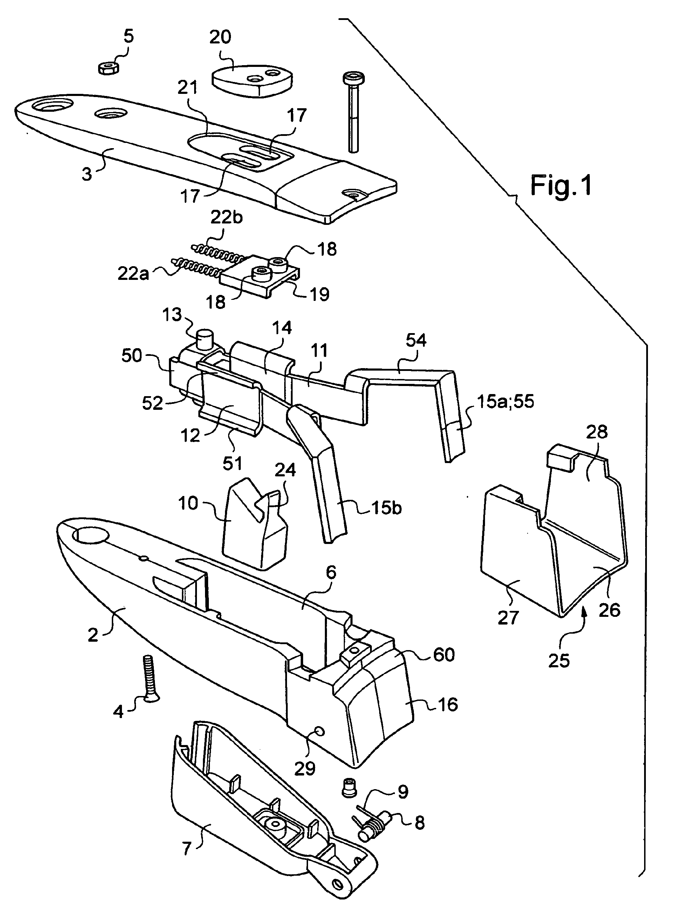

On se reporte tout d'abord aux figures 1 à 9.

La poignée 1 comprend une coque inférieure 2 et une coque supérieure 3. Les coques inférieure et supérieure 2, 3 sont par exemple réalisées en matériau polymère moulé ou injecté, de préférence résistant à la chaleur, par exemple en matériau polymère thermodurcissable tel que bakelite® (anhydrure de polyoxybenzylméthylèneglycol). L'assemblage des coques 2, 3 est réalisé par un ensemble vis 4/écrou 5, dans le mode de réalisation représenté, d'autres modes d'assemblage pouvant être mis en oeuvre, par exemple le collage, le soudage, le brasage, en fonction des matériaux utilisés pour la fabrication des coques 2, 3. On peut, en variante, prévoir une conception monobloc.

La coque inférieure 2 est pourvue d'une réservation 6 dans laquelle un levier 7 est au moins en partie logé, ce levier 7 étant monté en articulation sur la coque inférieure 2, suivant un axe 8 sensiblement transversal. Un moyen élastique 9, tel qu'un ressort de torsion est monté sur l'axe 8, ce moyen élastique 9 provoquant la saillie du levier 7 vers le bas, en l'absence de sollicitation manuelle sur le levier 7.

Le levier 7 est creux et une came 10 est fixée dans le creux du levier 7. Dans un mode de réalisation, cette came 10 est par exemple métallique et rapportée, par vissage ou autre moyen équivalent, au creux du levier 7, réalisé en matériau polymère, résistant tant aux contraintes mécaniques qu'à la chaleur, et formé par moulage ou injection. Il est également envisageable de réaliser la came et le levier par usinage dans une matière plastique, céramique ou métallique. Dans une autre réalisation, le levier et la came sont venus de matière.

La poignée 1 comprend deux bras 11, 12 articulés autour d'un axe 13 sensiblement perpendiculaire à l'élancement de la poignée 1.

Ces bras 11, 12 sont par exemple réalisés en acier inoxydable, par exemple AISI 304 L.

Chaque bras 11, 12 comporte une paroi latérale 14 contre laquelle une paroi correspondante de la came 10 vient en appui, lors du pivotement du levier 7. Chaque bras 11, 12 comporte une partie extrême distale 15a, 15b s'étendant sensiblement parallèlement à la paroi avant 16 de la coque inférieure 2. Ainsi qu'il apparaîtra plus complètement dans la suite de cette description, les parties extrêmes 15a, 15b des bras 11, 12 sont destinées à venir en appui contre la face interne de la paroi d'un récipient lorsque la paroi avant 16 de la coque inférieure 2 est en appui contre la face externe de la paroi dudit récipient et que la poignée 1 est fixée sur celui-ci.

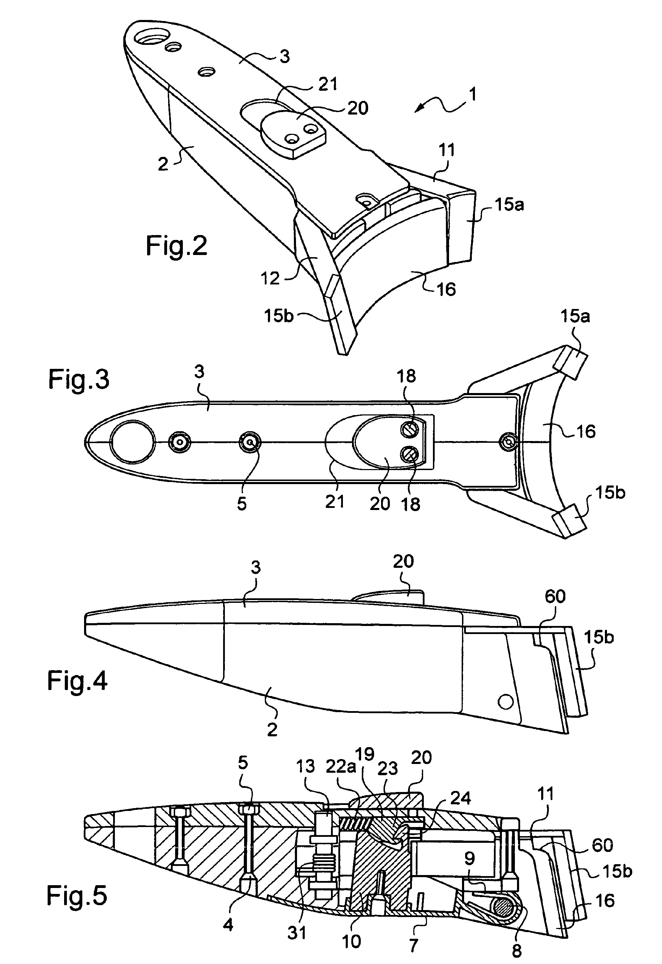

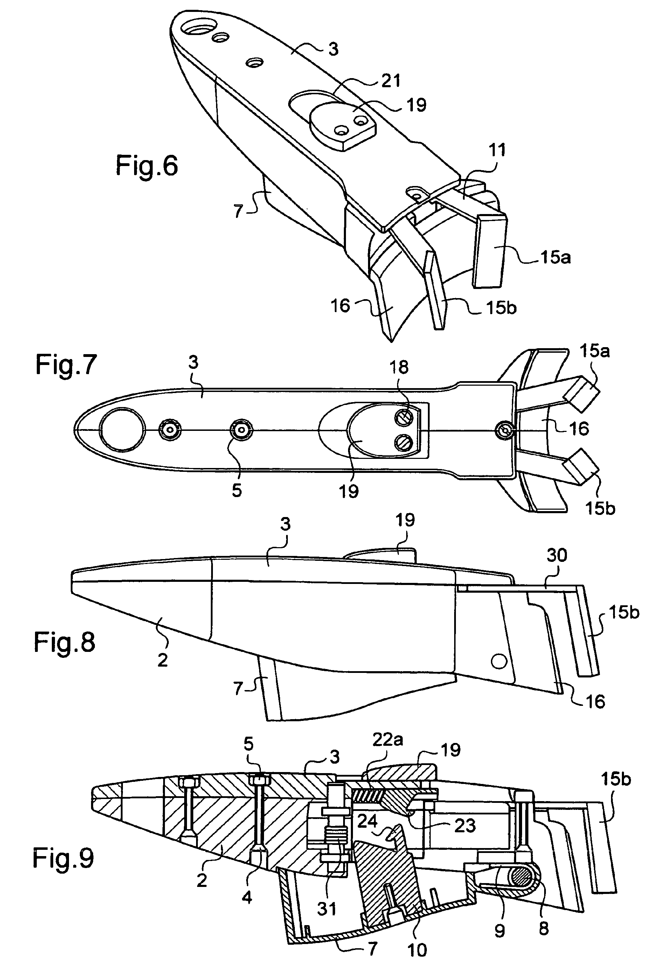

La coque supérieure 3 comprend deux trous oblongs 17 de passage de tétons 18 d'un coulisseau 19. Un bouton de commande 20 est monté, par exemple par des vis, sur ce coulisseau 19. Ce bouton de commande 20 est monté mobile en translation longitudinale dans une gorge 21 de la coque supérieure 3. Ce mouvement de translation du bouton de commande 20 provoque ainsi le mouvement du coulisseau 19, à l'encontre d'un moyen élastique tel qu'un ressort de compression 22a, 22b. En l'absence de sollicitation manuelle sur le bouton de commande 20, ce bouton 20 est en butée fin de course avant dans la gorge 21, cette position étant représentée en figures 2 et 6. Avantageusement, la position fin de course du bouton de commande peut être contrôlée visuellement. Par exemple, une pastille de couleur 20f devient visible au travers d'une ouverture 3f de la coque supérieure lorsque le bouton 20 est en position fin de course.

Le coulisseau 19 porte, en face inférieure, une saillie 23 formant crochet, la came 10 étant pourvue en partie supérieure d'une saillie 24 complémentaire à la saillie 23 du coulisseau 19.

Une bague 25 vient enserrer entre elles les deux coques 2, 3. Dans la réalisation représentée, cette bague 25 présente un profil transversal en U dont la base 26 vient en appui contre la paroi inférieure de la coque inférieure 2 et les deux ailes 27, 28 viennent masquer les ouvertures de passage 29 de l'axe d'articulation 8 du levier 7.

Cette bague 25 protège le matériau formant les coques 2, 3 d'une exposition directe à la flamme ou à une source de chaleur rayonnante. Avantageusement, la bague 25 est en acier, par exemple en acier inoxydable de type AISI 304 L (dit acier 18110).

Ainsi qu'il apparaît en figure 6 notamment, la poignée 1 présente une enveloppe générale ergonomique, sans partie blessante, sans bord coupant, les coques 2, 3 ayant avantageusement un état de surface soigné, par exemple satiné ou laqué. Le cas échéant, les coques 2, 3 sont pourvu d'un revêtement antidérapant.

Ainsi qu'il apparaît en figures 4 et 8 notamment, les bras 11, 12 comprennent chacun une partie proximale 30 mobile entre la coque supérieure 3 et la coque inférieure 2. Un organe élastique, tel qu'un ressort de torsion 31 assure qu'en position d'ouverture de la poignée 1, c'est-à-dire en position non montée sur un récipient, les deux bras 11, 12 sont rapprochés l'un de l'autre. Dans les modes de réalisation représentés, cet organe élastique est monté sur l'axe 13 d'articulation des bras 11, 12.

Dans d'autres modes de réalisation, non représentés, les deux bras 11, 12 sont formés par les deux branches d'un ressort de torsion, monté sur un axe tel que l'axe 13 placé sur les figures.

La poignée 1 comprend ainsi un organe mobile entre une position ouverte et une position fermée, cette organe mobile comprenant deux bras 11, 12, articulés autour d'un axe 13.

Dans les réalisations représentées, cette articulation est assurée par le montage de chacun des deux bras 11, 12 sur un axe 13 transversal, un moyen élastique tel qu'un ressort de torsion 31 assurant un couple entre les deux bras 11, 12, tendant à leur écartement.

Dans d'autres modes de réalisation, non représentés, cette articulation est assurée autour d'un axe sensiblement longitudinal.

La poignée 1 comprend des moyens de déplacement aptes à être commandés manuellement entre une position d'ouverture et une position de fermeture. Ces moyens de déplacement entraînent le mouvement de l'organe mobile, lors de leur passage de leur position d'ouverture à leur position de fermeture.

Dans les réalisations représentés, ces moyens de déplacement comprennent un levier 7 articulé autour d'un axe sensiblement transversal 8, une came 10 rapportée à ce levier 7 ou venue de matière avec ce levier 7, la came 10 transformant le mouvement de rotation du levier 7 en un mouvement de rotation de chacun des deux bras 11, 12, autour de l'axe 13.

Dans d'autres modes de réalisation, non représentés, la came transforme le mouvement de rotation du levier 7 en un mouvement de translation de chacun des deux bras, cette translation provoquant leur écartement mutuel suivant une direction sensiblement transversale.

La poignée 1 comprend un organe fixe pourvue d'une paroi avant destiné à venir en appui contre la face externe de la paroi latérale d'un récipient.

Dans les modes de réalisation représentés, cette paroi avant est sensiblement intégralement formée par la paroi avant 16 de la coque inférieure 2. Avantageusement, cette paroi avant est pourvue d'un revêtement protecteur, par exemple une bande d'acier, notamment acier inoxydable ou un revêtement élastomère résistant à la chaleur. Cette paroi avant 16 est galbée à simple ou double concavité, de sorte à épouser au mieux les parois externes des récipients de dimensions conventionnelles.

La poignée 1 comprend des moyens de blocage adaptés à immobiliser, de manière réversible, l'organe mobile dans sa position fermée.

Dans les modes de réalisation représentés, ces moyens de blocage comprennent une saillie 23 d'un coulisseau 19, cette saillie 23 venant en appui contre une saillie 24 correspondante de la came 10, le mouvement de ce coulisseau 19 étant commandé manuellement par actionnement d'un bouton 20 supérieur, à l'encontre de moyens élastiques tels que par exemple des ressorts de compression 22a, 22b.

Dans d'autres modes de réalisation, non représentés, le blocage réversible de la came 10 est obtenu par un aimant, ou bien encore un encliquetage d'une partie déformable de la came.

Le fonctionnement de la poignée 1 telle que représentée sur les figures est le suivant, partant d'un état non monté sur un récipient.

Dans un premier temps, la poignée 1 est saisie manuellement, le levier 7 étant en position sortie, représentée en figure 6. Le bouton de commande 20 est alors en position de butée fin de course, par l'effet des moyens élastiques tels que des ressorts de compression 22a, 22b. Un moyen visuel, tel qu'une pastille de couleur 20f visible au droit d'une ouverture 3f de la coque supérieure 3 permet de contrôler cet état du bouton de commande 20.

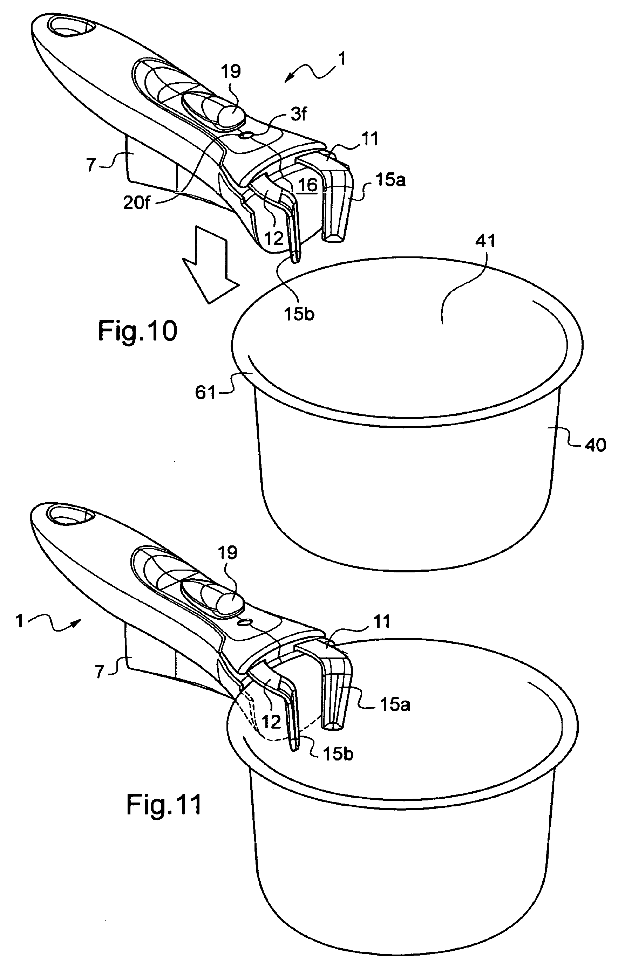

Puis, la poignée 1 est manipulée de sorte qu'une paroi de récipient 40 soit logée entre la paroi avant 16 de la coque inférieure 3 et les bras 11, 12. Pour ce faire, un mouvement sensiblement vertical de la poignée 1 est nécessaire, ainsi qu'il est représenté en figure 10.

Le levier 7 est alors actionné de sorte à pivoter autour de l'axe 8. Ce mouvement de pivotement du levier 7 provoque le contact des parois latérales de la came 10 avec les parois latérales 14 des bras 11, 12 et l'écartement de ces deux bras 11, 12, l'un par rapport à l'autre. Cet écartement provoque un mouvement des parties extrêmes 15a, 15b des bras 11, 12 suivant sensiblement un arc de cercle dont l'axe contient sensiblement l'axe d'articulation 13. Par ce mouvement en arc de cercle, les parties extrêmes 15a, 15b des deux bras 11, 12 viennent en appui contre la face interne 41 de la paroi du récipient 40. Le verrouillage est obtenu en actionnant le bouton 20 à l'encontre des ressort 22a 22b, la saillie 24 de la came 10 venant ainsi se loger contre la saillie 23 du coulisseau 19, le retour élastique du bouton 20 de commande bloquant la came 10. Par ce retour élastique, le bouton de commande est à nouveau en butée fin de course. Un moyen visuel, tel qu'une pastille de couleur 20f visible au droit d'une ouverture 3f de la coque supérieure 3 permet de contrôler cet état du bouton de commande 20.

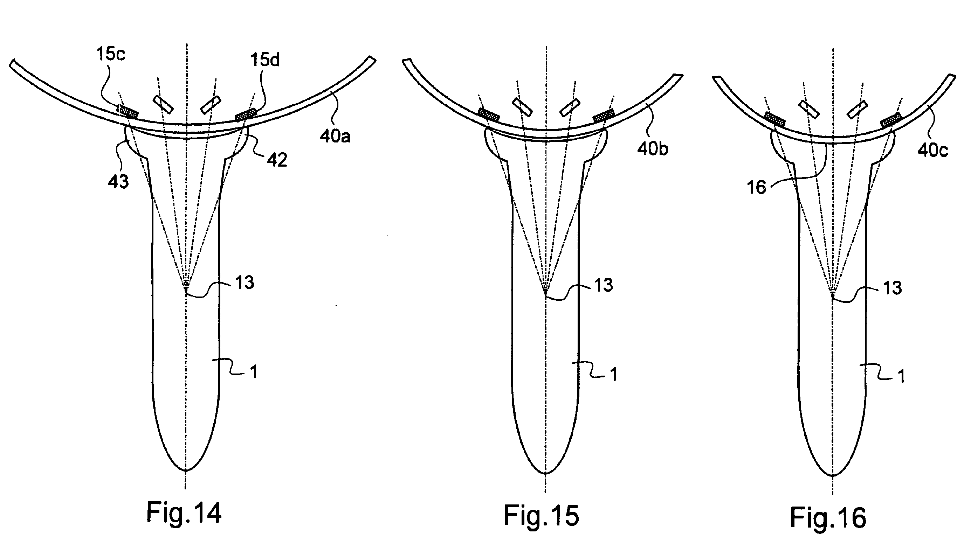

Ainsi qu'il apparaît en figures 14 à 16, l'articulation des deux bras 11, 12 l'un par rapport à l'autre permet de monter la poignée 1 sur des récipients 40 présentant des diamètres très différents.

Lorsque le récipient 40a est de grand diamètre, le contact entre la paroi avant 16 de la poignée et la paroi du récipient peut être limité aux parties latérales 42, 43 de cette paroi avant 16.

A l'inverse, lorsque le récipient 40c est de petit diamètre, la quasi-totalité de la paroi avant 16 de la poignée 1 vient sensiblement en contact avec la paroi du récipient.

Lorsque le récipient 40a est de grand diamètre (figure 14), le contact entre la paroi du récipient et les parties extrêmes 15a, 15b des bras 11, 12 est sensiblement limité à un bord latéral 15c, 15d de ces parties extrêmes.

A l'inverse, lorsque le récipient 40c est de petit diamètre (figure 16), le contact entre la paroi du récipient et les parties extrêmes 15a, 15b des bras 11, 12 est sensiblement obtenue sur toute la largeur de ces parties extrêmes.

Le démontage de la poignée 1 est obtenu de la manière suivante. Le bouton de commande 20 est actionné à l'encontre de son ressort de rappel et libère la came 10, le levier 7 retournant à sa position basse sous l'effet d'un ressort de rappel 9 logé autour de l'axe 8. Les deux bras 11, 12 se rapprochent l'un de l'autre sous l'effet du ressort de rappel 31 et les parties extrêmes 15a, 15b des bras 11, 12 décrivent sensiblement un arc de cercle dont l'axe contient sensiblement l'axe d'articulation 13. Par ce mouvement en arc de cercle, les parties extrêmes 15a, 15b des bras 11, 12 quittent l'appui de la paroi du récipient 40 et un mouvement sensiblement vertical sur la poignée permet de la libérer complètement du récipient 40.

Les bras articulés 11, 12 comprennent, en partant de leur extrémité proximale de montage sur l'axe d'articulation 13 :
- une première section 50 pourvue d'une partie centrale plane et de bords inférieurs et supérieurs ourlés 51, 52. Ces bords ourlés facilitent l'action d'écartement des bras 11, 12 par la came 10 ;
- une deuxième section 53 formant un angle de quelques degrés avec la première section 50 ;
- une troisième section 54 sensiblement perpendiculaire à la deuxième section 53 ;
- une quatrième section 55 sensiblement perpendiculaire à la troisième section 54, cette quatrième section 55 étant destinée à venir en appui contre la face interne de la paroi du récipient, lorsque la poignée 1 est en position montée.

Avantageusement, la quatrième section 55 est galbée, ainsi qu'il apparaît en figure 1. Cee galbe permet d'éviter que le mouvement d'écartement des bras, lors de mise en place de la poignée, ne se traduise par un contact brutal de cette quatrième section 55 contre la paroi interne du récipient. Cette disposition est particulièrement avantageuse lorsque le récipient est pourvu d'un revêtement en Téflon ®. D'une manière plus générale, les risques de rayure de la paroi interne du récipient sont ainsi évités.

Dans les modes de réalisation représentés, les bras 11, 12 sont issus par exemple d'estampage et pliage d'une bande métallique de section rectangulaire, par exemple en acier inoxydable. Dans d'autres modes de réalisation, les parties extrêmes 55 des bras 11, 12 sont de section sensiblement rondes ou ovales.

La partie avant de la poignée 1 comprend un rebord 60 formant sabot. Ce sabot présente une courbure complémentaire à la courbure de la lèvre de versement 61 des récipients conventionnels. Le maintien de la poignée en position montée sur le récipient est ainsi renforcé, notamment lorsque le récipient est lourd.

Il est entendu que la poignée trouve une application particulièrement avantageuse pour les récipients culinaires, mais qu'elle trouve également application pour le transport d'autres récipients, notamment pour les laboratoires.

## Revendications

1. Dispositif de préhension amovible (1) d'un récipient culinaire (40), ce dispositif comprenant un organe fixe et un organe mobile entre une position ouverte et une position fermée, ce dispositif comprenant des moyens de déplacement adaptés à être commandés manuellement entre une position d'ouverture et une position de fermeture, ces moyens de déplacement entraînant, lors du passage de leur position d'ouverture à leur position de fermeture, le mouvement de l'organe mobile de sa position ouverte à sa position fermée, l'organe fixe comprenant une paroi avant destinée à venir au moins partiellement en appui contre la face externe de la paroi périphérique d'un récipient culinaire, l'organe mobile étant destiné, dans sa position fermée, à venir en appui contre la face interne de la paroi périphérique dudit récipient, **caractérisé en ce que** l'organe mobile comprend deux bras (11, 12), chacun des deux bras (11, 12) étant pourvu d'une partie extrême (15a, 15b) s'étendant sensiblement parallèlement à la paroi avant (16) de l'organe fixe (2, 3), les moyens de déplacement (7, 10) entraînant, lors du passage entre leur position de fermeture et leur position d'ouverture, le déplacement latéral des parties extrêmes (15a, 15b) des bras (11, 12).

2. Dispositif selon la revendication 1, **caractérisé en ce que** les deux bras (11, 12) sont articulés l'un par rapport à l'autre autour d'un axe, le déplacement des parties extrêmes (15a, 15b) des deux bras (11, 12) comprenant une composante sensiblement perpendiculaire à l'axe d'articulation.

3. Dispositif selon la revendication 2, **caractérisé en ce que** les deux bras venus de matière avec l'axe d'articulation.

4. Dispositif selon la revendication 1 ou 2, **caractérisé en ce que** les deux bras sont montés articulés sur un axe (13), le déplacement des parties extrêmes (15a, 15b) des deux bras (11, 12) s'effectuant sensiblement suivant un arc de cercle dont l'axe contient sensiblement l'axe l'articulation (13).

5. Dispositif selon l'une quelconque des revendications 1 à 4, **caractérisé en ce que** les moyens de déplacement comprennent une came (10) et un levier (7), la came (10) étant rapportée au levier (7) ou venue de matière avec le levier et transformant le mouvement de rotation du levier (7) en un mouvement d'écartement des bras (11, 12) l'un par rapport à l'autre.

6. Dispositif selon la revendication 5, **caractérisé en ce que** les bras (11, 12) étant articulés autour d'un axe (13) et le levier (7) étant articulé autour d'un axe (8) sensiblement perpendiculaire à l'axe (13) d'articulation des bras (11, 12), la came (10) transforme le mouvement de rotation du levier (7) en un mouvement d'écartement des bras (11, 12) l'un par rapport à l'autre.

7. Dispositif selon l'une quelconque des revendications 1 à 6, **caractérisé en ce qu'**il comprend des moyens de blocage, adaptés à immobiliser l'organe mobile dans sa position fermée.

8. Dispositif selon la revendication 7, **caractérisé en ce que** les moyens de blocage comprennent des moyens portés par la came (10) et des moyens complémentaires portés par une pièce solidaire d'un bouton de commande (20).

9. Dispositif selon la revendication 8, **caractérisé en ce que** les moyens portés par la came (10) comprennent une saillie (24) apte à venir en appui réversible contre une saillie (23) d'un coulisseau (19) solidaire du bouton de commande (20).

10. Dispositif selon l'une quelconque des revendications précédentes, **caractérisé en ce que** les parties extrêmes (15a, 15b) des bras (11, 12) s'étendent, en position d'ouverture, de part et d'autre de la paroi avant de l'organe fixe (2, 3).

11. Dispositif selon l'une quelconque des revendications précédentes, **caractérisé en ce que** les parties extrêmes (15a, 15b) des bras (11, 12) sont pourvues d'une courbure, lorsque vue en coupe suivant un plan sensiblement perpendiculaire à leur direction d'élancement.

12. Dispositif selon l'une quelconque des revendications précédentes, **caractérisé en ce qu'**il comprend un témoin visuel passant d'un premier état à un deuxième état, lorsque les moyens de déplacement quittent leur position d'ouverture ou leur position de fermeture.

13. Ensemble comprenant au moins un récipient culinaire et au moins un dispositif de préhension amovible dudit récipient, selon l'une des revendications 1 à 12.

## Claims

1. Removable gripping device (1) for a cooking vessel (40), said device comprising a fixed member and a member which is mobile between an open position and a closed position, said device comprising displacement means capable of being controlled manually between an opening position and a closing position, said displacement means, when moving from the opening position thereof to the closing position thereof, causing the movement of the mobile member from its open position to its closed position, the fixed member comprising a front wall designed to bear at least partially against the external face of the peripheral wall of a cooking vessel, the mobile member, in its closed position, being designed to bear against the internal face of the peripheral wall of said vessel, **characterized in that** the mobile member comprises two arms (11, 12), each of the two arms (11, 12) being provided with an end part (15a, 15b) extending substantially parallel to the front wall (16) of the fixed member (2, 3), the displacement means (7, 10), when moving between the closing position thereof and the opening position thereof, causing the lateral displacement of the end parts (15a, 15b) of the arms (11, 12).

2. Device according to Claim 1, **characterized in that** the two arms (11, 12) are articulated relative to one another about a pin, the displacement of the end parts (15a, 15b) of the two arms (11, 12) comprising a component substantially perpendicular to the pivot pin.

3. Device according to Claim 2, **characterized in that** the two arms are made in one piece with the pivot pin.

4. Device according to Claim 1 or 2, **characterized in that** the two arms are mounted in an articulated manner on a pin (13), the displacement of the end parts (15a, 15b) of the two arms (11, 12) being carried out substantially according to a circular arc, the axis thereof substantially containing the pivot pin (13).

5. Device according to any one of Claims 1 to 4, **characterized in that** the displacement means comprise a cam (10) and a lever (7), the cam (10) being attached to the lever (7) or made in one piece with the lever and transforming the rotational movement of the lever (7) into a movement separating the arms (11, 12) relative to one another.

6. Device according to Claim 5, **characterized in that** as the arms (11, 12) are articulated about a pin (13) and the lever (7) is articulated about a pin (8) substantially perpendicular to the pivot pin (13) of the arms (11, 12), the cam (10) transforms the rotational movement of the lever (7) into a movement separating the arms (11, 12) from one another.

7. Device according to any one of Claims 1 to 6, **characterized in that** it comprises blocking means, capable of immobilizing the mobile member in its closed position.

8. Device according to Claim 7, **characterized in that** the blocking means comprise means carried by the cam (10) and complementary means carried by a part fixed to a control button (20).

9. Device according to Claim 8, **characterized in that** the means carried by the cam (10) comprise a projection (24) capable of bearing reversibly against a projection (23) of a slider (19) fixed to the control button (20).

10. Device according to any one of the preceding claims, **characterized in that** the end parts (15a, 15b) of the arms (11, 12) extend, in the open position, on both sides of the front wall of the fixed member (2, 3).

11. Device according to any one of the preceding claims, **characterized in that** the end parts (15a, 15b) of the arms (11, 12) are provided with a curved portion, when viewed in section along a plane substantially perpendicular to the longitudinal direction thereof.

12. Device according to any one of the preceding claims, **characterized in that** it comprises a visual indicator, passing from a first state to a second state, when the displacement means leave the opening position thereof or the closing position thereof.

13. Assembly comprising at least one cooking vessel and at least one removable gripping device for said vessel, according to one of Claims 1 to 12.

## Patentansprüche

1. Abnehmbare Griffvorrichtung (1) eines Kochbehälters (40), wobei diese Vorrichtung ein festes Organ und ein zwischen einer geöffneten Stellung und einer geschlossenen Stellung bewegliches Organ aufweist, wobei diese Vorrichtung Verlagerungsmittel umfasst, die dazu ausgelegt sind, manuell zwischen einer Öffnungsstellung und einer Schließstellung gesteuert zu werden, wobei diese Verlagerungsmittel beim Übergang aus ihrer Öffnungsstellung in ihre Schließstellung die Bewegung des beweglichen Organs aus seiner geöffneten Stellung in seine geschlossene Stellung zur Folge haben, wobei das feste Organ eine vordere Wand aufweist, die dazu bestimmt ist, sich wenigstens teilweise an der äußeren Fläche der Umfangswand eines Kochbehälters abzustützen, wobei das bewegliche Organ dazu bestimmt ist, sich in seiner geschlossenen Stellung an der inneren Fläche der Umfangswand des Behälters abzustützen, **dadurch gekennzeichnet, dass** das bewegliche Organ zwei Arme (11, 12) aufweist, wobei jeder der zwei Arme (11, 12) mit einem Endabschnitt (15a, 15b) versehen ist, der sich im Wesentlichen parallel zu der vorderen Wand (16) des festen Organs (2, 3) erstreckt, wobei die Verlagerungsmittel (7, 10) bei ihrem Übergang aus ihrer Schließstellung in ihre Öffnungsstellung die seitliche Verlagerung der Endteile (15a, 15b) der Arme (11, 12) zur Folge haben.

2. Vorrichtung nach Anspruch 1, **dadurch gekennzeichnet, dass** die zwei Arme (11, 12) aneinander um eine Achse angelenkt sind, wobei die Verlagerung der Endteile (15a, 15b) der zwei Arme (11, 12) eine Komponente aufweisen, die zu der Schwenkachse im Wesentlichen senkrecht ist.

3. Vorrichtung nach Anspruch 2, **dadurch gekennzeichnet, dass** die zwei Arme mit einer Schwenkachse einteilig ausgebildet sind.

4. Vorrichtung nach Anspruch 1 oder 2, **dadurch gekennzeichnet, dass** die zwei Arme an einer Achse (13) angelenkt sind, wobei die Verlagerung der Endteile (15a, 15b) der zwei Arme (11, 12) im Wesentlichen längs eines Kreisbogens erfolgt, dessen Achse die Schwenkachse (13) im Wesentlichen enthält.

5. Vorrichtung nach einem der Ansprüche 1 bis 4, **dadurch gekennzeichnet, dass** die Verlagerungsmittel einen Nocken (10) und einen Hebel (7) umfassen, wobei der Nocken (10) mit dem Hebel (7) verbunden oder mit dem Hebel einteilig ausgebildet ist und die Drehbewegung des Hebels (7) in eine Bewegung einer gegenseitigen Entfernung der Arme (11, 12) voneinander umwandelt.

6. Vorrichtung nach Anspruch 5, **dadurch gekennzeichnet, dass** die Arme (11, 12) um eine Achse (13) angelenkt sind und der Hebel (7) um eine Achse (8), die zu der Schwenkachse (13) der Arme (11, 12) im Wesentlichen senkrecht ist, angelenkt ist, wobei der Nocken (10) die Drehbewegung des Hebels (7) in eine Bewegung der Entfernung der Arme (11, 12) voneinander umwandelt.

7. Vorrichtung nach einem der Ansprüche 1 bis 6, **dadurch gekennzeichnet, dass** sie Blockiermittel umfasst, die dazu ausgelegt sind, das bewegliche Organ in seiner geschlossenen Stellung unbeweglich zu machen.

8. Vorrichtung nach Anspruch 7, **dadurch gekennzeichnet, dass** die Blockiermittel Mittel, die von dem Nocken (10) getragen werden, und komplementäre Mittel, die von einem mit einem Steuerknopf (20) fest verbundenen Teil getragen werden, umfassen.

9. Vorrichtung nach Anspruch 8, **dadurch gekennzeichnet, dass** die von dem Nocken (10) getragenen Mittel einen Vorsprung (24) aufweisen, der sich umkehrbar an einem Vorsprung (23) eines mit dem Steuerknopf (20) fest verbundenen Gleiters (19) abstützt.

10. Vorrichtung nach einem der vorhergehenden Ansprüche, **dadurch gekennzeichnet, dass** sich die Endteile (15a, 15b) der Arme (11, 12) in der Öffnungsstellung beiderseits der vorderen Wand des festen Organs (2, 3) erstrecken.

11. Vorrichtung nach einem der vorhergehenden Ansprüche, **dadurch gekennzeichnet, dass** die Endteile (15a, 15b) der Arme (11, 12) in einem Schnitt in einer Ebene, die zu ihrer Erstreckungsrichtung im Wesentlichen senkrecht ist, mit einer Krümmung versehen sind.

12. Vorrichtung nach einem der vorhergehenden Ansprüche, **dadurch gekennzeichnet, dass** sie einen visuellen Zeiger aufweist, der von einem ersten Zustand in einen zweiten Zustand übergeht, wenn die Verlagerungsmittel ihre Öffnungsstellung oder ihre Schließstellung verlassen.

13. Anordnung, die wenigstens einen Kochbehälter und wenigstens eine abnehmbare Greifvorrichtung des Behälters nach einem der Ansprüche 1 bis 12 umfasst.
